(19) Europäisches Patentamt
European Patent Office
Office européen des brevets

(11) **EP 4 641 250 A1**

(12) **EUROPEAN PATENT APPLICATION**

(43) Date of publication:
**29.10.2025 Bulletin 2025/44**

(21) Application number: **25161663.7**

(22) Date of filing: **04.03.2025**

(51) International Patent Classification (IPC):
*G01S 7/48* $^{(2006.01)}$   *G01S 7/41* $^{(2006.01)}$
*G01S 13/06* $^{(2006.01)}$   *G01S 13/86* $^{(2006.01)}$
*G01S 13/89* $^{(2006.01)}$   *G01S 13/931* $^{(2020.01)}$
*G01S 17/06* $^{(2006.01)}$   *G01S 17/894* $^{(2020.01)}$
*G01S 17/931* $^{(2020.01)}$   *G06V 10/764* $^{(2022.01)}$
*G06V 10/82* $^{(2022.01)}$   *G06V 20/56* $^{(2022.01)}$
*G06V 20/58* $^{(2022.01)}$

(52) Cooperative Patent Classification (CPC):
G01S 17/06; G01S 7/417; G01S 7/4808;
G01S 13/06; G01S 13/867; G01S 13/89;
G01S 13/931; G01S 17/894; G01S 17/931;
G06V 10/764; G06V 10/82; G06V 20/56;
G06V 20/58; G01S 17/86

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2024 US 202418647458**

(71) Applicant: **NXP B.V.**
**5656 AG Eindhoven (NL)**

(72) Inventors:
• ZHAI, Peiyuan
  5656AG Eindhoven (NL)
• PANDHARIPANDE, Ashish
  5656AG Eindhoven (NL)
• JOSEPH, Geethu
  5656AG Eindhoven (NL)
• MYERS, Nitin Jonathan
  5656AG Eindhoven (NL)

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **OCCUPANCY GRID MAPPING SYSTEM AND METHOD**

(57) The present disclosure relates to systems and methods for occupancy grid mapping. In one or more embodiments, a system includes a detection and ranging system configured to transmit signals, receive reflected signals corresponding to reflections of the transmitted signals by objects in an environment around the detection and ranging system, and generate point cloud data indicating positions of the objects, computer-readable memory configured to store side information, which can one or more digital maps, images of the environment, or previously generated occupancy grid maps, and processing circuitry configured to receive the point cloud data from the detection and ranging system, receive the side information from the computer-readable memory, determine hyperparameters for a mapping model based on the side information, and process the point cloud data using the mapping model using the hyperparameters to generate an occupancy grid map of the environment.

FIG. 2

**Description**

TECHNICAL FIELD

Embodiments of the subject matter described herein relate generally to systems and methods for mapping the area around a vehicle, such as systems and methods for occupancy grid mapping.

BACKGROUND

Automotive perception systems are commonly employed to sense and understand environments in and around a vehicle. Such automotive perception systems typically generate and leverage maps, such as occupancy grid maps, indicating the locations of obstacles in the environment of the vehicle. Occupancy grid mapping, in an automotive context, typically involves the generation of a two-dimensional (2D) map of an environment surrounding a vehicle based on sensor data, typically radar or Light Detection and Ranging (LiDAR) data, with each cell of the map being assigned a binary value indicating the presence or absence of an obstacle at a corresponding location. Conventional occupancy grid mapping techniques typically compute these binary values via approximate posterior estimation.

BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:

FIG. 1 shows an illustrative block diagram of an automotive system that includes processing circuitry, memory, transceivers, and sensors configured to perform occupancy grid mapping, in accordance with various embodiments;
FIG. 2 shows a block diagram illustrating data flow and data transformation for an occupancy grid mapping process utilizing side information (SI), in accordance with various embodiments;
FIG. 3 shows illustrative charts of respective Light Detection and Ranging (LiDAR) and radar sensor models, in accordance with various embodiments;
FIG. 4 shows an illustrative chart representing an estimated occupancy probability map, in accordance with various embodiments;
FIG. 5 shows illustrative charts including an SI-estimated occupancy probability map and pairs of occupancy probability maps and OGMs generated with and without setting model hyperparameters based on the estimated occupancy probability map, respectively, using a radar-based primary sensor, in accordance with various embodiments;
FIG. 6 shows illustrative charts including an SI-estimated occupancy probability map and pairs of occupancy probability maps and OGMs generated with and without setting model hyperparameters based on the estimated occupancy probability map, respectively, using a LiDAR based primary sensor, in accordance with various embodiments;
FIG. 7 shows an illustrative process flow for a method of generating an OGM based on an estimated occupancy probability map, in accordance with various embodiments; and
FIG. 8 shows an illustrative process flow for a method of generating an estimated occupancy probability map, which may be used in the method of FIG. 8, in accordance with various embodiments.

DETAILED DESCRIPTION

The following detailed description is merely illustrative in nature and is not intended to limit the embodiments described herein and uses of such embodiments. Furthermore, there is no intention to be bound by any expressed or implied theory presented in the preceding technical field, background, or the following detailed description.
For simplicity and clarity of illustration, the figures illustrate the general manner of construction. Descriptions and details of well-known features and techniques may be omitted from the following detailed description to avoid unnecessarily obscuring the present disclosure. For example, the dimensions of some of the elements or regions in the figures may be exaggerated relative to other elements or regions to help improve understanding of embodiments described herein.
The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. As used herein the terms "approximate," "approximately," "substantial" and "substantially" mean sufficient to accomplish the stated purpose in a practical manner and that minor imperfections, if any, are not significant for the stated purpose.

Along these lines, when used with references to measurable quantities including, but not limited to, dimensions, these terms mean that the quantities are equal to the values stated subject to accepted tolerances of any methods or apparatus chosen to fabricate the described structures or measure the quantities or dimensions described. Directional references such as "top," "bottom," "left," "right," "above," "below," and so forth, unless otherwise stated, are not intended to require any preferred orientation and are made with reference to the orientation of the corresponding figure or figures for purposes of illustration. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Herein, elements or nodes or features are sometimes referred to as being "connected" or "coupled" together. As used herein, unless expressly stated otherwise, "connected" means that one element is directly joined to (or directly communicates with) another element in an electrical or non-electrical manner, and not necessarily mechanically. Likewise, unless expressly stated otherwise, "coupled" means that one element is directly or indirectly joined to (or directly or indirectly communicates with) another element in an electrical or non-electrical manner, and not necessarily mechanically. Thus, although the schematic illustrations shown in the figures depict exemplary arrangements of elements, additional intervening elements, devices, features, or components may be present in one or more embodiments of the depicted subject matter.

Various embodiments described herein relate to systems (e.g., automotive systems; robotic systems) and methods for generating occupancy grid maps (OGMs). Herein, an "occupancy grid map" or "OGM" refers to a map, which may be represented as a two-dimensional grid, of binary values each indicating an occupancy status (e.g., occupied or unoccupied) of a corresponding location in the environment around the system (e.g., automotive system; vehicle; robot) that generates the map.

Occupancy grid maps are typically used in automotive systems to provide information about obstacles and available free space in the environment surrounding a vehicle. Conventional occupancy grid mapping approaches typically rely solely on data derived from a single time-of-flight (ToF) transceiver system as a basis for algorithmic OGM generation using one of various probabilistic or Gaussian-processed-based models. Such conventional approaches typically fail to exploit one or more features or characteristics of a typically automotive environment, such as sparsity of occupancy or the clustering of occupied cells or free cells. In contrast, embodiments herein relate to an automotive system that utilizes "side information" (e.g., camera images, previously generated OGMs, digital map data, or a combination of these; sometimes referred to herein as "additional data") in addition to data (e.g., point clouds) obtained via a primary ToF transceiver system for OGM generation, where leveraging this side information may advantageously increase detection likelihood and reduce the false positive rate for unoccupied cells compared to conventional occupancy grid mapping approaches.

In one or more embodiments, an automotive system may include processing circuitry, memory, and sensors (e.g., radar transceivers, Light Detection and Ranging (LiDAR) transceivers, image sensors (i.e., cameras), or other suitable sensors), where the processing circuitry is configured to generate a side-information-estimated ("SI-estimated") occupancy probability map based on "side information" that may include or may be derived from previously generated OGMs, camera images, digital maps, or any suitable combination of these. The processing circuitry may be configured to generate an OGM based on the SI-estimated occupancy probability map. For example, the processing circuitry may be configured to define hyperparameters for an occupancy grid mapping model (e.g., a Sparse Bayesian Learning (SBL) model, an inverse sensor model (ISM), a Bayesian Generalized Kernel (BGK) model, or another suitable model) based on occupancy probabilities defined for grid cells of the SI-estimated occupancy probability map. In one or more embodiments, the processing circuitry is configured to use an SBL model to generate the OGM, and is configured to determine hyperparameters of the SBL model for each cell of the OGM based on an occupancy probability defined for a corresponding cell of the SI-estimated occupancy probability map.

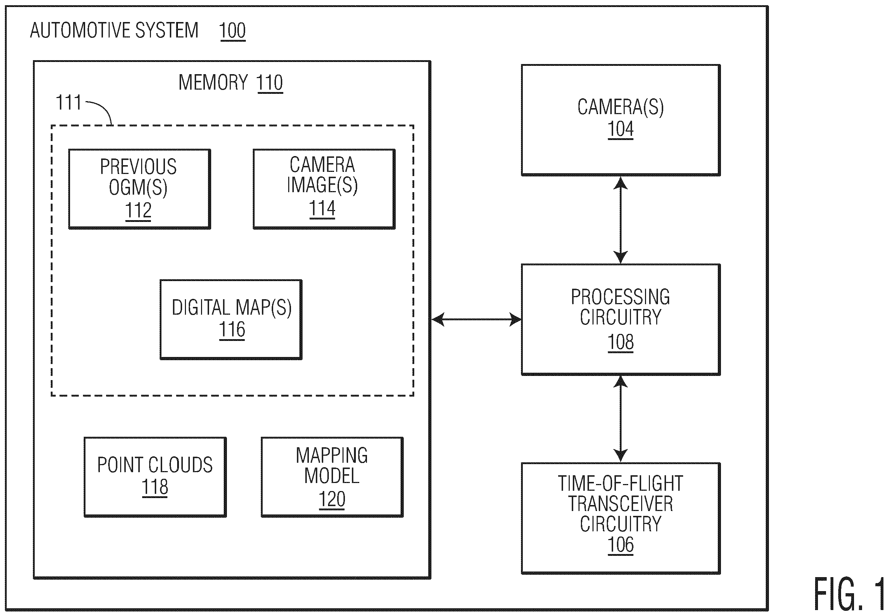

FIG. 1 shows an automotive system 100 (sometimes referred to herein as the "system 100") that includes one or more cameras 104, time-of-flight (ToF) transceiver circuitry 106, processing circuitry 108, and memory 110. The processing circuitry 108 may be configured to generate occupancy grid maps (OGMs) representing a surrounding environment of the automotive system 100 based, at least in part, on side information 111 (sometimes referred to herein as "SI 111"), which may include camera images, digital maps, previously generated OGMs, or other suitable side information, as described in greater detail below. It should be understood the present example is intended to be illustrative and non-limiting, such that other sensor systems, processing circuitry, memories, or any suitable combination of these may be included in the automotive system 100 in addition to the systems and devices shown, in accordance with one or more other embodiments.

The memory 110 may be configured to store previously generated OGMs 112, camera images 114, one or more digital maps 116, point clouds 118 (e.g., which may include radar point clouds or LiDAR point clouds, in accordance with various embodiments), and a mapping model 120 (e.g., computer-readable instructions which, when executed by the processing circuitry 108, implement an occupancy grid mapping model). The memory 110 may be implemented as a single non-transitory computer-readable memory device, or as several such devices that are coupled to the processing circuitry 108.

In one or more embodiments, the cameras 104 may generate the camera images 114 and may transfer the camera images 114 to the memory 110. The processing circuitry 108 may be configured to process the camera images 114 to detect (and, in some instances, identify) objects (e.g., obstacles) in the camera images 114. For example, the processing circuitry 108 may be configured to apply a neural-network-based visual object detection algorithm to the camera images 114 to detect objects in the environment of the automotive system 100 and to determine an estimated location of each detected object relative to the location of the automotive system 100, in one or more embodiments. The cameras 104 may include multiple cameras placed at different locations on a vehicle associated with the automotive system 100 (e.g., at front, back, back-left, back-right, front-left, and front-right sides of the vehicle, as non-limiting examples), such that multiple views of different regions of the environment around the automotive system 100 are represented in the camera images 114.

The ToF transceiver circuitry 106 may include one or more radar transceivers, LiDAR transceivers, or a combination of these, and may include associated transceiver circuitry and signal processing circuitry, in accordance with various embodiments. For example, the ToF transceiver circuitry 106 may include or may be included in a detection and ranging system, such as a LiDAR system or a radar system. The ToF transceiver circuitry 106 may be configured to generate the point clouds 118 and may provide the point clouds 118 to the memory 110. The point clouds 118 may include radar point clouds, LiDAR point clouds, or a combination of these. The point clouds 118 may represent one or more locations of one or more objects (e.g., object surfaces) detected by the TOF transceiver circuitry 106. In one or more embodiments, the ToF transceiver circuitry 106 may include distributed radar transceivers or LiDAR transceivers with transmitting and receiving elements that are disposed multiple locations on a vehicle, such that such that multiple views of different regions of the environment around the automotive system 100 are represented in the point clouds 118. In one or more embodiments a given transceiver of the ToF transceiver circuitry 106 may have a sampling rate of between around 4 Hz to around 100 Hz.

The digital maps 116 may include one or more static or dynamic digital maps representing one or more regions and including information defining at least some static (e.g., structural) obstacles or other objects, such as roads and buildings. The mapping model 120 may be a probabilistic occupancy grid mapping model, such as a Sparse Bayesian Learning (SBL) model, a Bayesian Generalized Kernel (BGK) model, or an inverse sensor model (ISM), as non-limiting examples. As will be described, the mapping model 120, when executed by the processing circuitry 108, may process the point clouds 118 to generate OGMs representing the environment surrounding the automotive system 100, where hyperparameters of the mapping model 120 may be determined based on the side information 111, which may include the previously generated OGMs 112, the camera images 114, the digital maps 116, or any suitable combination of these, as non-limiting examples.

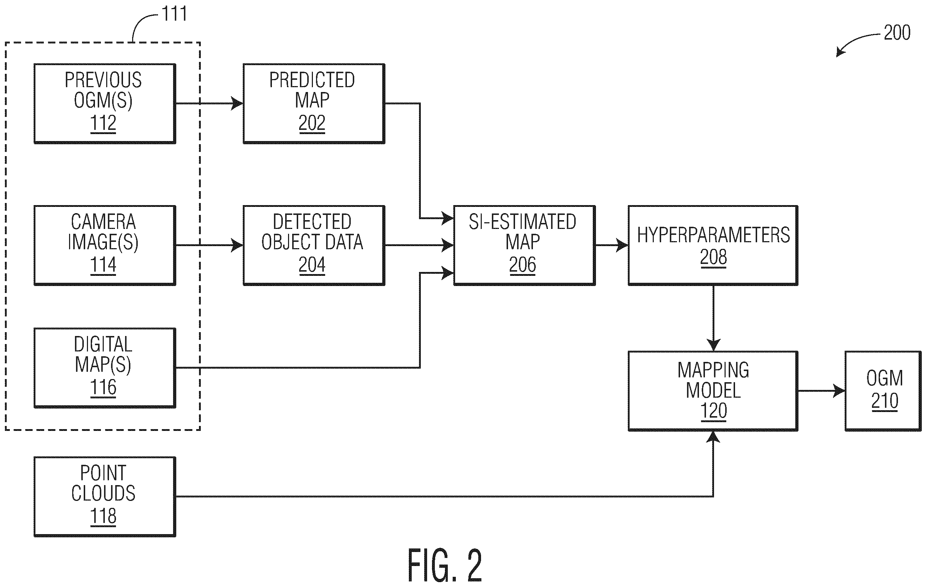

For example, FIG. 2 shows a diagram 200 illustrating data flow and data transformation an occupancy grid mapping process that may be performed by processing circuitry of an automotive system, such as the automotive system 100 of FIG. 1, whereby an OGM 210 representing an environment around the automotive system is generated. The example of FIG. 2 is described with reference FIG. 1, with like reference numerals denoting like elements. While process steps of the the illustrated occupancy grid mapping process are described below as being performed by the processing circuitry 108 of FIG. 1, it should be understood that this is intended to be illustrative and non-limiting, such that the process may be carried out using other suitable processing circuitry in accordance with one or more other embodiments.

In one or more embodiments, the processing circuitry 108 may be configured to perform preprocessing on the point clouds 118. For example, one or more point clouds outside of an identified region of interest may be removed from the point clouds 118 to reduce computational complexity. For one or more embodiments in which the point clouds 118 are LiDAR point clouds, one or more point clouds that are lower than a height threshold may be removed from the point clouds 118 to reduce noise attributable to ground scatter from drivable areas.

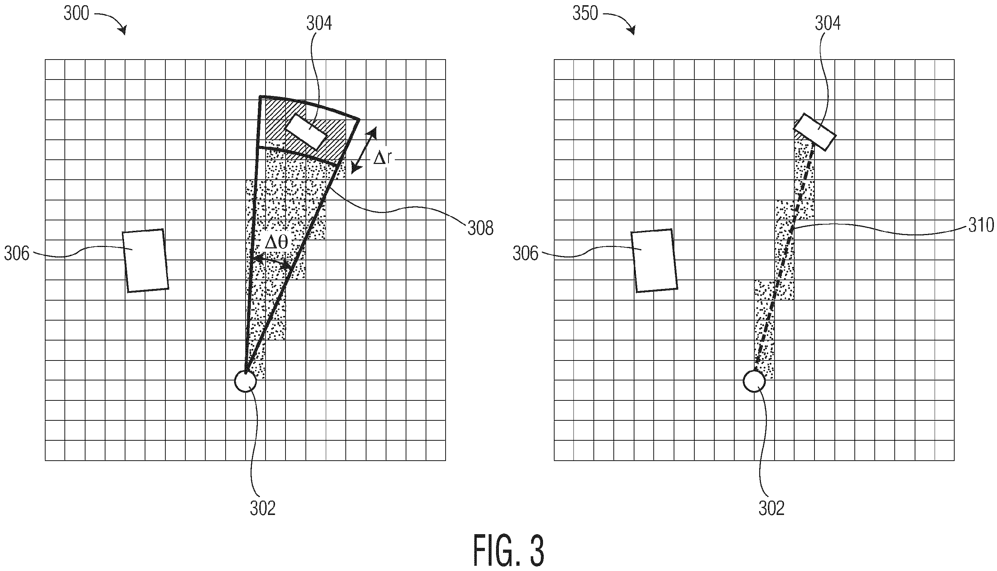

The processing circuitry 108 may be (e.g., after preprocessing of the point clouds 118) configured to map the point cloud measurements of each of the point clouds 118 to free cells and occupied cells of a grid map. For LiDAR point clouds, this mapping may be performed using a suitable algorithm, such as the Bresenham's line algorithm. For radar point clouds, this mapping may be modeled as a cone with limited range, as explained in more detail below. Examples of radar and LiDAR sensor models that may be used in mapping radar point cloud data or LiDAR point cloud data, respectively, to discrete cells of a grid map is shown in FIG. 3.

FIG. 3 shows a grid 300 representing a radar sensor model and a grid 350 representing a LiDAR sensor model, each representing a respective linear model (sometimes referred to herein as a "linear sensor measurement model") for mathematical modeling point clouds, such as the point clouds 118 of FIGS. 1 and 2, in order to map reflection points (sometimes referred herein to as "point cloud measurements" or "detections") of the point clouds to discrete cells of a grid map. In the present example, for ease of comparison, the grid 300 and the grid 350 show the same scene, which includes an ego vehicle 302 (e.g., including an automotive system, such as the automotive system 100 of FIG. 1, configured to generate point clouds, such as the point clouds 118, using suitable sensor modalities), an obstacle 304, and an obstacle 306.

In the grid 300, corresponding to the radar sensor model, occupancy space for a radar point cloud is modeled by a first portion of a cone 308 limited to the range:

$$\left( r - \frac{\Delta \text{r}}{2}, r + \frac{\Delta \text{r}}{2} \right) \tag{1}$$

and angle:

$$\left( \theta - \frac{\Delta \theta}{2}, \theta + \frac{\Delta \theta}{2} \right) \tag{2}$$

and free space for the radar point cloud is modeled as a second portion of the cone 308 with radius $r - (\Delta r/2)$ and the same angle limitations as the occupancy space, where r denotes distance between the ego vehicle 302 and the reflection point (in this case located at the obstacle 304) and $\theta$ denotes angle of the reflection point. Here, $\Delta$r is a parameter that defines, in part, the distance limits of occupancy space and $\Delta \theta$ is a parameter that defines the angular limits of the cone for both the occupancy space and the free space. In the present example, hatching is used to indicate occupied cells and stippling is used to indicate free or unoccupied cells. Cells for which no occupancy assessment has been made are unpatterned. As shown, cells of the grid 300 that are within the occupancy space (e.g., by more than a predetermined amount) are indicated to be occupied, and cells that are within the free space are indicated to be free (i.e., unoccupied). It should be understood that the above radar sensor model is intended to be illustrative and non-limiting, and that other suitable radar sensor models may instead be used. For example, in one or more other embodiments, another suitable radar sensor model may be based on Bresenham's line algorithm (e.g., similar to the LiDAR sensor model described below).

In the grid 350, corresponding to the LiDAR sensor model, an algorithm, such as the Bresenham's line algorithm, is applied to find free and occupied cells based on reflection points of LiDAR point clouds. For example, each LiDAR point cloud measurement indicates that the corresponding to the reflection point, discretized to the nearest cell of the grid, is occupied, and cells along the line 310 linking the ego vehicle 302 to the reflection point (in this case, located at the obstacle 304) are indicated to be free (i.e., non-occupied).

The linear measurement model for either the grid 300 or the grid 350 may be defined using the free and occupied cells determined for each point cloud measurement. Each point cloud measurement can be regarded as two linear measurements of the underlying occupancy probabilities for free cells and occupied cells, respectively. Let the number of grid cells on the map be $N$ and $\boldsymbol{x} \in [0,1]^N$ is the vectorized version of the occupancy probabilities of the $N$ cells. The linear measurements of the mth point cloud measurement is given by:

$$\begin{bmatrix} y_{free} \\ y_{occ} \end{bmatrix} = \begin{bmatrix} A_{2m-1} \\ A_{2m} \end{bmatrix} \boldsymbol{x}, \tag{3}$$

where $A_{2m-1} \in \{0,1\}^N$ is a row selection vector whose values are 1 at the free cell indices and 0 otherwise. Similarly, $A_{2m} \in \{0,1\}^N$ is also a row selection vector with 1 at the occupied indices and 0 otherwise. The values for $y_{occ}$ and $y_{free}$ are prefixed such that $y_{free}$ is close to 0 and $y_{occ}$ is close to 1. By combining the linear measurements of all $M$ point cloud measurements, the linear measurement model may be given by:

$$\boldsymbol{y} = \boldsymbol{Ax} + \boldsymbol{n}, \tag{4}$$

where $y \in [0,1]^{2M}$ is the occupancy status vector, $\boldsymbol{A} \in \{0,1\}^{2M \times N}$ is the measurement matrix, and the measurement noise is assumed to be Gaussian $\boldsymbol{n} \sim \mathcal{N}(0, \sigma^2 \boldsymbol{I}_N)$, with an unknown noise variance $\sigma^2 > 0$.

Returning to FIG. 2, the processing circuitry 108 may generate hyperparameters 208 to be used by the mapping model 120 based on the side information 111, which may include the previously generated OGMs 112, the camera images 114, or the digital maps 116. It should be understood that the side information 111 in the present example is illustrative and is not limited to data generated by the automotive system 100. For example, in one or more other embodiments, the side information 111 may additionally or alternatively include data obtained (e.g., via wireless communication) from neighboring vehicles or roadside units.

For example, the processing circuitry 108 may be configured to generate a predicted map 202 based on the previously generated OGMs 112. In one or more embodiments, the processing circuitry 108 may generate the predicted map 202 based on between 1 and 10 previously generated OGMs of the previously generated OGMs 112, as a non-limiting example. The predicted map 202 may define estimated positions of objects or obstacles in the environment of the automotive system 100 based on the positions of those objects or obstacles in the previously generated OGMs 112. For example, the processing circuitry 108 may determine a trajectory of a given object represented in a subset of the previously generated OGMs 112, and may predict a current location of the given object based on the determined trajectory alone or in combination with other information, such as the velocity and heading of the vehicle associated with the automotive system 100.

The processing circuitry 108 may be configured to generate detected object data 204 based on the camera images 114. For example, the processing circuitry 108 may utilize an object detection technique, which may utilize a neural-network-enabled visual object detection algorithm, to detect objects or obstacles in the environment of the automotive system 100 and to determine an estimated location of each detected object relative to the location of the automotive system 100. In one or more embodiments, a neural-network-enabled visual object detection algorithm applied by the processing circuitry 108 to generate the detected object data 204 may additionally generate confidence scores for each object detection, such that the detected object data 204 may define both positions and occupancy probabilities of objects detected in the camera images 114, where the occupancy probabilities are determined based on the confidence scores.

The processing circuitry 108 may be configured to generate a side-information-estimated occupancy probability map 206 (sometimes referred to herein as an "SI-estimated occupancy probability map 206" or "SI-estimated map 206") based on one or more of the predicted map 202, the detected object data 204, or the digital maps 116. For example, estimated object positions and unoccupied positions represented in any suitable combination of the predicted map 202, the detected object data 204, or the digital maps 116 may be included in the SI-estimated map 206. Each estimated object position and each unoccupied position may be associated with a respective cell of the SI-estimated map 206, and the processing circuitry 108 may define an estimated occupancy probability for each cell of the SI-estimated map 206. For example, the SI-estimated map 206 may be modeled using an index set $\mathcal{T} \subset \{1, 2, ..., N\}$ and $\mathcal{T}^C \subset \{1, 2, ..., N\}$, where $N$ represents the number of cells of the SI-estimated map 206, $\mathcal{T}$ is a subset containing indices of the estimated occupied grid cells, and $\mathcal{T}^C$ is the complement of $\mathcal{T}$, which contains the indices of estimated unoccupied grid cells. Herein, $\mathcal{T}$ is sometimes referred to as an "index set of occupied grid cells" and $\mathcal{T}^C$ is sometimes referred to as an "index set of unoccupied grid cells." In one or more embodiments, $\mathcal{T}^C$ may include indices of grid cells that are estimated to be unoccupied as well as indices of grid cells that are estimated as having no strong preference toward either being occupied or being unoccupied (e.g., neutral grid cells; grid cells having an intermediate occupancy probability).

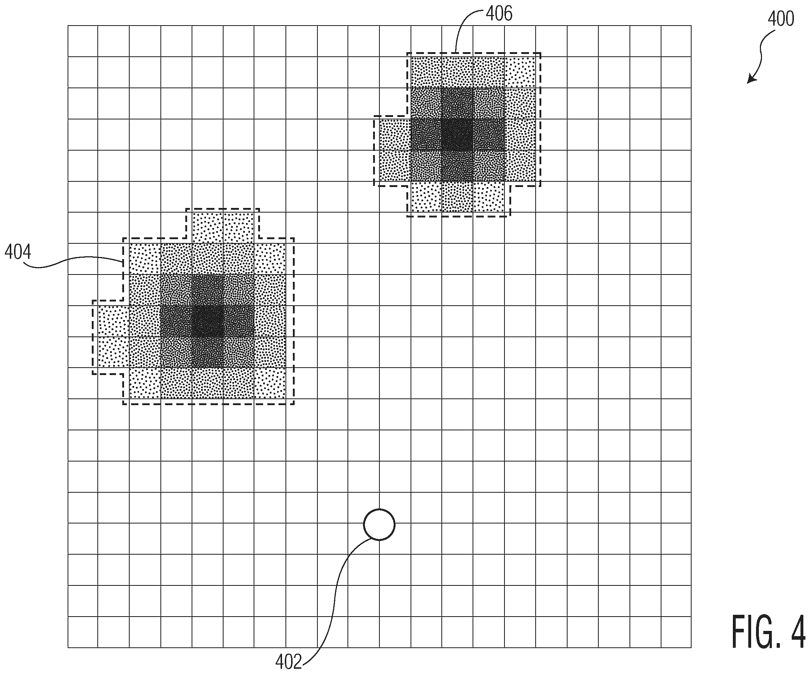

In one or more embodiments, the estimated occupancy probability for a given cell of the SI-estimated map 206 having a non-zero occupancy probability indicated by multiple sources of the side information 111 or derivatives thereof (e.g., the predicted map 202 or the detected object data 204) may be determined using a simple average of the indicated occupancy probabilities, a weighted average of the indicated occupancy probabilities, or another suitable measure of central tendency, as non-limiting examples. An example of an estimated occupancy grid map, such as the SI-estimated map 206, is shown in FIG. 4.

FIG. 4 shows an estimated occupancy probability map 400, which may be generated using side information (SI), such as detected objects in camera images (e.g., the detected object data 204 of FIG. 2), a predicted map derived from previously generated OGMs (e.g., the predicted map 202 of FIG. 2), digital maps (e.g., the digital maps 116 of FIGS. 1 and 2), or any suitable combination of these. As a non-limiting example, the estimated occupancy probability map 400 may correspond to one or more embodiments of the SI-estimated map 206 of FIG. 2. For ease of comparison, the environment represented in the estimated occupancy probability map 400 may correspond to that shown in the grids 300 and 350 of FIG. 3.

As shown, the estimated occupancy probability map 400 includes potentially occupied regions 404 and 406, which may be defined relative to the position of an ego vehicle 402. Each of the regions 404 and 406 include cells with non-zero occupancy probabilities. In the present example, increasing stippling density of cells represents increasing occupancy probability. Cells with occupancy probabilities of zero or near zero are shown with no stippling.

When modeling the estimated occupancy probability map 400, the index set $\mathcal{T}$, described above, may include the indices of the grid cells in the regions 404 and 406, and the complementary index set $\mathcal{T}^C$ may include the indices of all other grid cells of the estimated occupancy probability map 400 (as these are estimated to be unoccupied in the present example).

Returning to FIG. 2, the processing circuitry 108 may be configured to generate or determine hyperparameters 208 based on the SI-estimated map 206. For example, the processing circuitry 108 may be configured to determine hyperparameters for use by the mapping model 120 to determine each cell value of the OGM 210 based on the occupancy probability values of each corresponding cell of the SI-estimated map 206. In one or more embodiments, the processing circuitry 108 may be configured to assign a first set of hyperparameter values for cells of the SI-estimated map 206 having occupancy probability values less than a threshold value, and may be configured to assign a second set of hyperparameter values for cells of the SI-estimated map 206 having occupancy probability values greater than or equal to the threshold value. In one or more other embodiments, the processing circuitry 108 may be configured to assign hyperparameter values based on the occupancy probability values of each cell of the SI-estimated map 206 using one or more predefined or learned functions by which hyperparameter values may be calculated for each cell based on the occupancy probability value of that cell in the SI-estimated map 206.

The processing circuitry 108 may be configured to apply the mapping model 120 to the point clouds 118, using the hyperparameters 208 to implement the mapping model 120. For an initially generated OGM 210, the mapping model 120 may not necessarily utilize hyperparameters 208 derived from all or, in some cases any, of the side information 111, as some such side information may be initially limited. For example, the processing circuitry 108 may be configured to omit the previously generated OGMs 112, the camera images 114, or both of these when generating the hyperparameters 208 until a predetermined quantity of previously generated OGMs 112 or camera images 114 are available.

The type of hyperparameters 208 determined by the processing circuitry 108 may depend, at least in part, on the model type of the mapping model 120. In one or more embodiments, the mapping model 120 may be an SBL model, and the hyperparameters 208 may include parameters of a hierarchical Gaussian prior used in the SBL model are determined based on the probabilities of the SI-estimated map 206. In one or more other embodiments, the mapping model 120 may be an ISM, and the hyperparameters 208 may include prior parameters for the ISM, where the prior parameters may be determined based on the probabilities of the SI-estimated map 206. In one or more other embodiments, the mapping model 120 may be a BGK model, and the hyperparameters 208 may include a kernel size for the BGK model, where the kernel size may be determined based on the respective sizes of objects represented in the SI-estimated map 206.

In one or more embodiments in which an SBL framework is used to implement the mapping model 120, a fictitious hierarchical prior may be imposed on the unknown sparse map $x$ (see, e.g., equations (3) and (4), above) and $x$ may be recovered by solving a type-II maximum a posteriori (MAP) problem. For example, the hierarchical prior on $x$ may include two layers, with a first layer of the prior assuming a zero-mean Gaussian prior,

$$x|\alpha \sim \prod_{n=1}^{N} \mathcal{N}(x_n; 0, \alpha_n^{-1}), \qquad (5)$$

where $\alpha$ represents the precision vector, containing unknown hyperparameters (that is, $\alpha$ represents a vector of hyperparameters). The hyperparameter vector $\alpha$ influences the sparsity of $x$. With a relatively large $\alpha_n$ value, the corresponding $x_n$ value has a very low variance and is close to zero. In contrast, with a relatively small $\alpha_n$ value, the corresponding $x_n$ value has a higher variance and is more likely to be non-zero (e.g., more likely to be closer to 1 in one or more embodiments). The second layer of the hierarchical prior may control the distributions of $\alpha$ given by the Gamma distributed hyperprior:

$$\alpha \sim \prod_{n=1}^{N} \text{Gamma}(\alpha_n; a_n, b_n), \qquad (6)$$

where the probability density function of the Gamma distribution *Gamma*($\alpha_n$; $a_n$, $b_n$) is:

$$\Gamma(a)^{-1} b^a \alpha^{a-1} e^{-b\alpha}, \qquad (7)$$

where a and b are hyperparameters and $\Gamma(a)$ is defined as:

$$\Gamma(a) = \int_0^\infty t^{a-1}e^{-t}dt. \qquad (8)$$

The SBL framework may assume a common hyperprior for all entries of $\alpha$ (i.e., $a_n = a$ and $b_n = b$). In the present example, a noninformative hyperprior is represented as a = 1 and b = 0. An informative hyperprior may be used to incorporate the side information represented in the SI-estimated map 206. For example, considering the index set $\mathcal{T}$ and the complement index set $\mathcal{T}^C$, described above, two sets of parameters for this informative hyperprior may be defined:

$$(a_n, b_n) = \begin{cases} (a_{\mathcal{T}}, b_{\mathcal{T}}) \ for \ n \in \mathcal{T} \\ (a_{\mathcal{T}}c, b_{\mathcal{T}}c) \ for \ n \in \mathcal{T}^C \end{cases} \qquad (9)$$

That is, a first set of hyperparameters $(a_{\mathcal{T}}, b_{\mathcal{T}})$ is used for $a_n$ and $b_n$ when determining $\alpha$ for grid cells indicated to be occupied in the SI-estimated map 206, and a second set of hyperparameters $(a_{\mathcal{T}}c, b_{\mathcal{T}}c)$ is used for $a_n$ and $b_n$ when determining $\alpha$ for grid cells indicated to be unoccupied in the SI-estimated map 206. In one or more embodiments, the second set of hyperparameters $(a_{\mathcal{T}}c, b_{\mathcal{T}}c)$ may also be used when determining $\alpha$ for grid cells indicated to be neutral (e.g., having an intermediate occupancy probability; lacking strong preference toward being either occupied or unoccupied) in the SI-estimated map 206. Here, to promote non-zero values of $x$ for grid cells identified in the occupied index set $\mathcal{T}$, the value of $a_{\mathcal{T}}$ is typically greater than 0 and less than $a_{\mathcal{T}}c$ and the value of $b_{\mathcal{T}}$ is typically much greater than the value of $b_{\mathcal{T}}c$ (which is greater than zero). In one or more embodiments, $(a_{\mathcal{T}}c, b_{\mathcal{T}}c)$ may be chosen similarly to the standard SBL, representing non-informative priors that promote sparsity of the OGM 210. As a non-limiting example, $(a_{\mathcal{T}}c, b_{\mathcal{T}}c)$ may be set to (0.5, 1E-4) and $(a_{\mathcal{T}}, b_{\mathcal{T}})$ may be set to (0.25, 1). In one or more embodiments, the map resolution of either or both of the OGM 210 and the SI-estimated map 206 is 0.5 m by 0.5 m, as a non-limiting example. In one or more other embodiments, lower resolutions (e.g., 1 m by 1 m) may be used when generating the OGM 210 and SI-estimated map 206 in less crowded environments (e.g., environments containing comparatively fewer objects or obstacles) for improved system performance (e.g., faster map generation). In one or more other embodiments, higher resolutions (e.g., 0.25 m by 0.25m) may be used when generating the OGM 210 and SI-estimated map 206 in more crowded environments (e.g., environments containing comparatively more objects or obstacles) for improved object differentiation.

While the present example provides for a binary selection between two sets of parameters $(a_{\mathcal{T}}, b_{\mathcal{T}})$ for occupied grid cells and $(a_{\mathcal{T}}c, b_{\mathcal{T}}c)$ for unoccupied grid cells, based on occupancy status indicated in the SI-estimated map 206, this is intended to be illustrative and non-limiting. For example, in one or more other embodiments, the values of $a_n$ and $b_n$ for grid cells indexed in the occupied set $\mathcal{T}$ may instead be set based on an occupancy probability value associated with the corresponding cell using one or more learned or predefined functions (e.g., that relate occupancy probability to values of the hyperparameters a and b).

A Gamma distribution is applied to the unknown measurement noise variance such that $\sigma^{-2} \sim Gamma(\sigma^{-2}; c, d)$, where c and d are small positive values (e.g., each around 1E-4).

Given the prior model, the probabilistic occupancy map $x$ may be obtained by first solving for the MAP estimate of $\alpha$ and $\sigma^2$ from equation (4) by maximizing the log-likelihood function $log \ p(y|\alpha, \sigma^2; \{a_n, b_n\}_{n=1}^N, c, d)$. These estimates may then be used to compute the MAP estimate of the occupancy grid map $x$, given by the posterior mean of the Gaussian distribution $p(x|y, A, \alpha, \sigma^2; \{a_n, b_n\}_{n=1}^N, c, d)$. An iterative expectation-maximization algorithm may be used due to the intractable nature of the MAP estimate of $\alpha$. The kth iteration of the expectation-maximization algorithm may be given as:

$$\alpha_n^{(k+1)} = \frac{1 + 2a_n}{(\mu_x^{(k)}[n])^2 + \Sigma_x^{(k)}[n, n] + 2b_n} \qquad (10)$$

$$(\sigma^2)^{(k+1)} = \frac{2d + \left\| \boldsymbol{y} - \boldsymbol{A}\boldsymbol{\mu}_x^{(k)} \right\|_2^2 + \mathrm{tr}(\boldsymbol{A}^T\boldsymbol{A}\boldsymbol{\Sigma}_x^{(k)})}{2M + 2c} \tag{11}$$

where $\alpha_n^{(k+1)}$ and $(\sigma^2)^{(k+1)}$ are the algorithm iterates of $\alpha$ and $\sigma^2$ in the $k$th iteration. Here, "tr( )" represents a trace operation. In one or more embodiments, $\alpha_n$ may be initialized as $\alpha_n^{(0)} = 0$, and $\sigma^2$ may be initialized as $(\sigma^2)^{(0)} = 0.5$, as a non-limiting example. Here, [$n$, $n$] denotes the value at position [$n$, $n$] of the matrix $\boldsymbol{\Sigma}_x^{(k)}$ at the kth iteration. Here, $\boldsymbol{\mu}_x^{(k)}$ and $\boldsymbol{\Sigma}_x^{(k)}$ are the posterior mean and variance, respectively, of $p(\boldsymbol{x}|\boldsymbol{y}, \boldsymbol{A}, \boldsymbol{\alpha}^{(k)}, (\sigma^2)^{(k)}; \{a_n, b_n\}_{n=1}^N, c, d)$, which may be given as:

$$\boldsymbol{\mu}_x^{(k)} = \frac{1}{(\sigma^2)^{(k)}} \boldsymbol{\Sigma}_x^{(k)} \boldsymbol{A}^T\boldsymbol{y} \tag{12}$$

$$\boldsymbol{\Sigma}_x^{(k)} = \left[ \frac{1}{(\sigma^2)^{(k)}} \boldsymbol{A}^T\boldsymbol{A} + \mathrm{diag}(\boldsymbol{\alpha}^{(k)}) \right]^{-1}. \tag{13}$$

Here, diag($\alpha^{(k)}$) is a diagonal matrix with diagonal elements corresponding to the vector $\alpha^{(k)}$. The processing circuitry 108 may determine a probabilistic occupancy map estimate $\hat{\mu}_x$ as the convergence of the iterations of the expectation-maximization algorithm (e.g., by iteratively updating, until convergence, each of: $\boldsymbol{\mu}_x^{(k)}$ and $\boldsymbol{\Sigma}_x^{(k)}$ according to equations (12) and (13), $\alpha_n^{(k+1)}$ according to equation (10), and $(\sigma^2)^{(k+1)}$ according to equation (11)). The processing circuitry 108 may then threshold the probabilistic occupancy map estimate $\hat{\mu}_x$ to derive a binary occupancy map $x_{binary}$, which may include comparing each grid cell value of the probabilistic occupancy map estimate $\hat{\mu}_x$ to a threshold value and replacing the grid cell value with 0 if the grid cell value is less than the threshold value and replacing the grid cell value with 1 if the grid cell value is greater than or equal to the threshold value. In one or more embodiments, the threshold value may be 0.3 as a non-limiting example. The OGM 210 may correspond to the binary occupancy map $x_{binary}$.

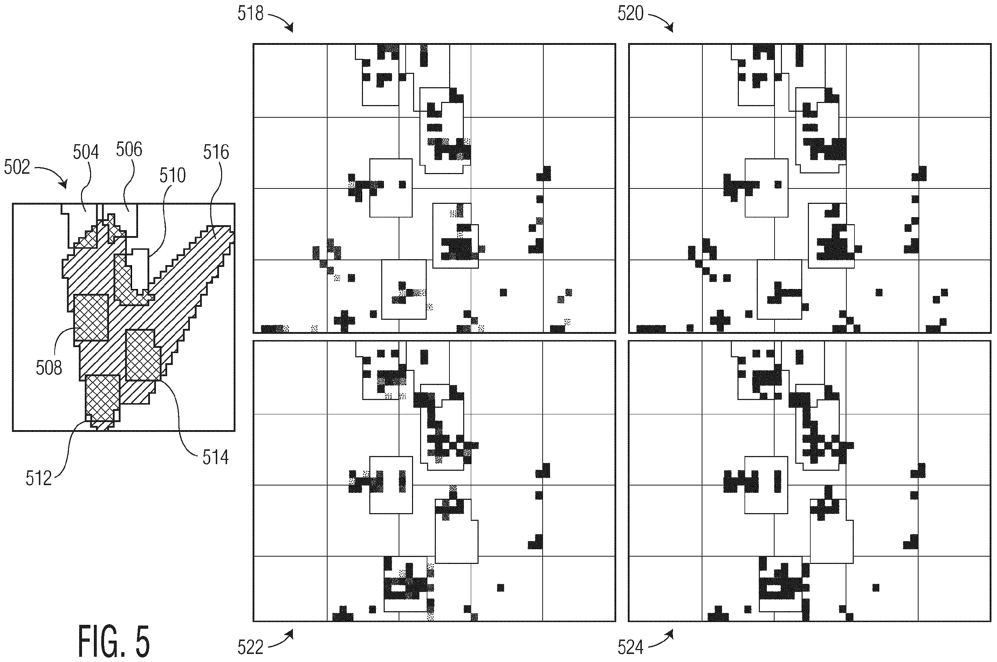

FIG. 5 shows an illustrative comparison between probabilistic occupancy map estimates and binary occupancy maps generated with and without utilizing side information. In the maps of the present example, radar is used as a primary sensor. An SI-estimated occupancy probability map 502, an unassisted occupancy probability map 518, an unassisted OGM 520, an SI-assisted occupancy probability map 522, and an SI-assisted OGM 524 are shown, each representing a portion of the same scene. In the present example, the unassisted occupancy probability map 518 and the unassisted OGM 520 are generated using the same mapping model as the SI-assisted occupancy probability map 522 and the SI-assisted OGM 524 utilizing the same radar point clouds, with differentiation being the determination of hyperparameters for the mapping model using the SI-estimated occupancy probability map 502 when generating the SI-assisted occupancy probability map 522 and the SI-assisted OGM 524 according to methods described herein, whereas predetermined hyperparameters are used to generate the unassisted occupancy probability map 518 and the unassisted OGM 520.

For example, processing circuitry of an automotive system, such as the processing circuitry 108 of the automotive system 100 of FIG. 1, may generate the SI-estimated occupancy probability map 502, based on camera images, such as camera images 114, depicting an environment around the automotive system and based on objects detected in the camera images, described above and may generate the SI-assisted occupancy probability map 522 and the SI-assisted OGM 524 based on the SI-estimated occupancy probability map 502 using a mapping model (e.g., the mapping model 120 of FIGS. 1 and 2). For example, hyperparameters of the mapping model may be set based on the grid cell values of the SI-estimated occupancy probability map 502, as described above.

In one or more embodiments, the SI-estimated occupancy probability map 502 may correspond, for example, to an embodiment of the SI-estimated occupancy probability map 206 of FIG. 2. In the present example, the SI-estimated occupancy probability map 502 is a binary map with grid cells in a region 516 having diagonal hatching (outside of the ground truth regions) or crosshatching (within the ground truth regions) corresponding to an estimated occupancy probability greater than or equal to a predetermined threshold and unpatterned grid cells corresponding to an estimated occupancy probability less than the predetermined threshold. Within the ground truth regions, occupied grid cells are indicated by crosshatching. Object ground truth regions 504, 506, 508, 510, 512, and 514 are included in the SI-estimated occupancy probability map 502, and indicate the actual locations of objects in the environment. Corresponding ground truths are provided in the unassisted occupancy probability map 518, the unassisted OGM 520, the SI-assisted occupancy probability map 522 and the SI-assisted OGM 524. In the probability maps 518 and 522, unpatterned cells correspond to cells with zero or near-zero occupancy probability, while cells with stippling have comparatively higher occupancy probabilities, with greater stippling density representing higher occupancy probability and lower stippling density representing lower occupancy probability. As shown, probabilities in the SI-assisted occupancy probability map 522 that overlap the region 516 are increased (e.g., indicated by increased stippling density), relative to those of the unassisted occupancy probability map 518. In some instances, grid cells that are indicated to be unoccupied in the unassisted occupancy probability map 518 instead have a non-zero occupancy probability in the SI-assisted occupancy probability map 522. This, in turn, results in greater coverage of the ground truth object locations in the SI-assisted OGM 524, compared to the unassisted OGM 520.

For example, comparing the performance of the SI-assisted OGM 524 to that of the unassisted OGM 520, the ground-truth intersection percentage for object ground truth regions 504, 506, 508, 510, 512, and 514, respectively, are 26.19%, 5.71%, 16.66%, 28.07%, 41.67%, and 62.74% for the SI-assisted OGM 524, and 23.8%, 8.57%, 8.33%, 26.32%, 8.33%, and 33.33% for the unassisted OGM 520. That is, for five of the six objects detected, the SI-assisted OGM 524 provides improved probability of detection compared to the unassisted OGM 520.

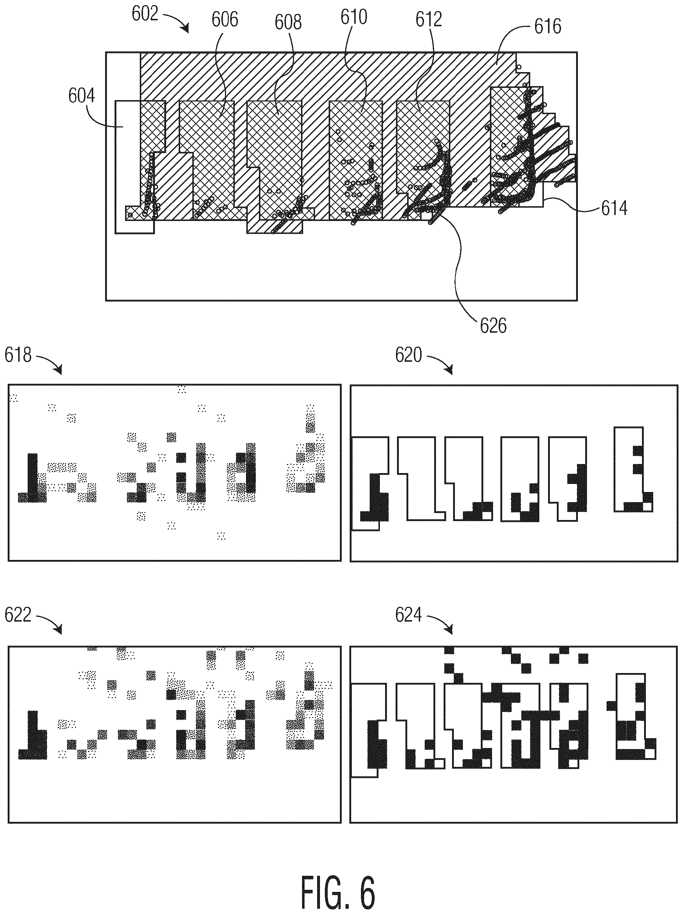

FIG. 6 shows an illustrative comparison between probabilistic occupancy map estimates and binary occupancy maps generated with and without utilizing side information. In the maps of the present example, LiDAR is used as a primary sensor. An SI-estimated occupancy probability map 602, an unassisted occupancy probability map 618, an unassisted OGM 620, an SI-assisted occupancy probability map 622, and an SI-assisted OGM 624 are shown, each representing a portion of the same scene. In the present example, the unassisted occupancy probability map 618 and the unassisted OGM 620 are generated using the same mapping model as the SI-assisted occupancy probability map 622 and the SI-assisted OGM 624 utilizing the same LiDAR point clouds, with differentiation being the determination of hyperparameters for the mapping model using the SI-estimated occupancy probability map 602 when generating the SI-assisted occupancy probability map 622 and the SI-assisted OGM 624 according to methods described herein, whereas predetermined hyperparameters are used to generate the unassisted occupancy probability map 618 and the unassisted OGM 620.

For example, processing circuitry of an automotive system, such as the processing circuitry 108 of the automotive system 100 of FIG. 1, may generate the SI-estimated occupancy probability map 602, based on camera images, such as camera images 114, depicting an environment around the automotive system and based on objects detected in the camera images, described above and may generate the SI-assisted occupancy probability map 622 and the SI-assisted OGM 624 based on the SI-estimated occupancy probability map 602 using a mapping model (e.g., the mapping model 120 of FIGS. 1 and 2). For example, hyperparameters of the mapping model may be set based on the grid cell values of the SI-estimated occupancy probability map 602, as described above. In one or more embodiments, object detection based on the camera images may be LiDAR-assisted, with LiDAR detections 626 represented here as circles.

In one or more embodiments, the SI-estimated occupancy probability map 602 may correspond, for example, to an embodiment of SI-estimated occupancy probability map 206 of FIG. 2. In the present example, the SI-estimated occupancy probability map 602 is a binary map with diagonally hatched grid cells (outside of the ground truth regions) or crosshatched grid cells (within the ground truth regions) corresponding to an estimated occupancy probability greater than or equal to a predetermined threshold and unpatterned grid cells corresponding to an estimated occupancy probability less than the predetermined threshold. Within the ground truth regions, occupied grid cells are indicated by crosshatching. Object ground truths 604, 606, 608, 610, 612, and 614 are included in the SI-estimated occupancy probability map 602, and indicate the actual locations of objects in the environment. Corresponding ground truths are provided in the unassisted OGM 620 and the SI-assisted OGM 624.

In the probability maps 618 and 622, unpatterned cells correspond to cells with zero or near-zero occupancy probability, while cells with stippling have comparatively higher occupancy probabilities, with greater stippling density representing higher occupancy probability and lower stippling density representing lower occupancy probability. As shown, probabilities in the SI-assisted occupancy probability map 622 that overlap the region 616 are increased (e.g., indicated by increased stippling density), relative to those of the unassisted occupancy probability map 618. In some instances, grid cells that are indicated to be unoccupied in the unassisted occupancy probability map 618 instead have a non-zero occupancy probability in the SI-assisted occupancy probability map 622. This, in turn, results in greater coverage of the ground truth object locations in the SI-assisted OGM 624, compared to the unassisted OGM 620.

For example, comparing the performance of the SI-assisted OGM 624 to that of the unassisted OGM 620, the ground-truth intersection percentage for object ground truths 604, 606, 608, 610, 612, and 614, respectively, are 14.71%, 12.5%, 12.12%, 41.67%, 45.45%, and 37.93% for the SI-assisted OGM 624, and 17.65%, 0%, 9.09%, 16.67%, 21.21%, and 17.24% for the unassisted OGM 620. That is, for five of the six objects detected, the SI-assisted OGM 624 provides improved probability of detection compared to the unassisted OGM 620. Additionally, in the SI-assisted OGM 624, the object represented by object ground truth 606 is successfully detected, and this object is not detected in the unassisted OGM 620.

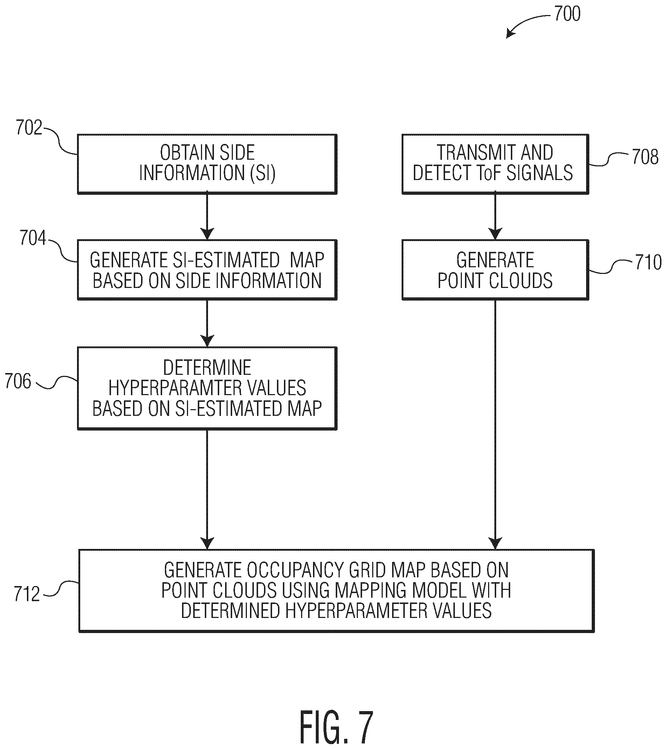

FIG. 7 shows an illustrative process flow for a method 700 by which an OGM may be generated based on point clouds generated using ToF transceiver circuitry (e.g., a radar system or LiDAR system, such as the ToF transceiver circuitry 106 of FIG. 1) and side information (e.g., the side information 111 of FIG. 1, such as the previously generated OGMs 112, camera images 114, digital maps 116, or other suitable side information) by an automotive system (e.g., the automotive system 100 of FIG. 1). The method 700 is described with reference to elements of the automotive system 100 of FIG. 1, including reference to the cameras 104, ToF transceiver circuitry 106, processing circuitry 108, memory 110, side information 111, previously generated OGMs 112, camera images 114, digital maps 116, point clouds 118, and mapping model 120, and aspects of such elements already described above are not necessarily repeated here for brevity. It should be understood that the reference to elements of the automotive system 100 is illustrative and not limiting, at least in that other suitable circuitry, systems, sensors, side information, data, models, or combinations thereof may be used when carrying out the method 700 in one or more other embodiments.

At block 702, the processing circuitry 108 obtains, from the memory 110, side information 111, such as previously generated OGMs 112, camera images 114, digital maps 116, or other suitable side information representing an environment surrounding the automotive system 100. For example, the camera images 114 may be captured by the cameras 104.

At block 704, the processing circuitry 108 generates an SI-estimated occupancy probability map (e.g., the SI-estimated occupancy probability map 206 of FIG. 2) based on the side information. For example, the SI-estimated occupancy probability map may be generated based on a predicted map (e.g., the predicted map 202 of FIG. 2) that includes estimated object locations in the environment generated based on previous positions of those objects in one or more of the previously generated OGMs 112. For example, the SI-estimated occupancy probability map may, additionally or alternatively, be generated based on detected object data (e.g., the detected object data 204 of FIG. 2) representing the locations of objects detected in the camera images 114. For example, the SI-estimated occupancy probability map may, additionally or alternatively, be generated based on one or more static or dynamic digital maps 116. The SI-estimated occupancy probability map 206 may include a grid of discrete cells (i.e., "grid cells"), each having an associated occupancy probability indicating the probability of an object occupying the location associated with that grid cell in the environment around the automotive system 100.

At block 706, the processing circuitry 108 determines hyperparameter values for a mapping model 120 (e.g., a model configured to generate an OGM based on point cloud data, such as an SBL, BGK, ISM, or other suitable mapping model) based on the SI-estimated occupancy probability map.

At block 708, the ToF transceiver circuitry 106 transmits ToF signals and detects reflections of the transmitted ToF signals, reflected by objects in the environment. The detected reflections may be represented and stored as "raw" (e.g., unprocessed) reflected ToF signal data. In one or more embodiments, the ToF transceiver circuitry 106 may include radar transceiver circuitry and the ToF signals may include radar signals. In one or more other embodiments, the ToF transceiver circuitry 106 may include LiDAR transceiver circuitry and the ToF signals may include LiDAR signals. In one or more embodiments, block 708 may be performed in parallel with block 702.

At block 710, the processing circuitry 108 generates point clouds 118 based on the raw reflected ToF signal data. For example, the processing circuitry 108 may generate the point clouds 118 using one or more signal processing and object detection techniques (e.g., range compression, doppler compression, and constant false alarm rate (CFAR) detection, for radar signal data and radar point clouds; statistical distance estimation techniques for LiDAR signal data and LiDAR point clouds, as non-limiting examples). In one or more embodiments, block 710 may be performed in parallel with either or both of blocks 704 and 706.

At block 712, the processing circuitry 108 may apply the mapping model 120 to the point clouds 118 using the hyperparameters determined based on the SI-estimated occupancy probability map at block 706 to generate an OGM (e.g., the OGM 210 of FIG. 2). In one or more embodiments, the processing circuitry 108 may cause the OGM to be stored in the memory 110 as one of the previously generated OGMs 112 for use in subsequent SI-estimated map generation.

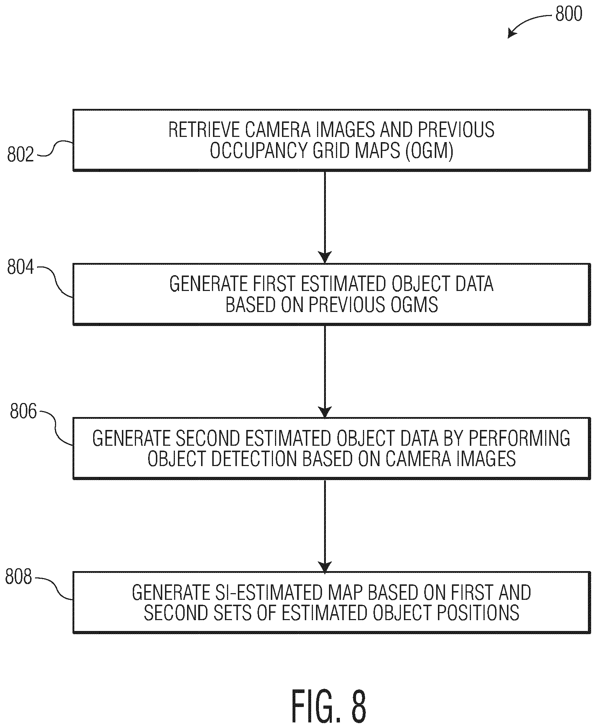

FIG. 8 shows an illustrative process flow for a method 800 by which an SI-estimated map (e.g., the SI-estimated map 206 of FIG. 2) may be generated based on side information (e.g., the side information 111 of FIG. 1, such as the previously generated OGMs 112 and camera images 114) by an automotive system (e.g., the automotive system 100 of FIG. 1). The method 800 may correspond to an example embodiment of blocks 702 and 704 of the method 700 of FIG. 7, in one or more embodiments. The method 800 is described with reference to elements of the automotive system 100 of FIG. 1, including reference to the cameras 104, processing circuitry 108, previously generated OGMs 112, and camera images 114, and aspects of such elements already described above are not necessarily repeated here for brevity. It should be understood that the reference to elements of the automotive system 100 is illustrative and not limiting, at least in that other suitable circuitry, systems, sensors, side information, or combinations thereof may be used when carrying out the method 800 in one or more other embodiments.

At block 802, the processing circuitry 108 obtains previously generated OGMs 112 and camera images 114 representing an environment surrounding the automotive system 100. For example, the camera images 114 may be captured by the cameras 104.

At block 804, the processing circuitry 108 generates first estimated object data based on the previously generated OGMs 112. In one or more embodiments, the first estimated object data may include a predicted map (e.g., the predicted map 202 of FIG. 2) generated based on the previously generated OGMs 112. In one or more embodiments, the processing circuitry 108 may generate the first estimated object data based on between 1 and 10 previously generated OGMs of the previously generated OGMs 112, as a non-limiting example. The first estimated object data may define estimated positions of objects in the environment of the automotive system 100 based on the positions of those objects in the previously generated OGMs 112. For example, the processing circuitry 108 may determine a trajectory of a given object represented in a subset of the previously generated OGMs 112, and may predict a current location of the given object based on the determined trajectory alone or in combination with other information, such as the velocity and heading of the vehicle associated with the automotive system 100, to determine estimated locations of corresponding objects to be represented in the first estimated object data.

At block 806, may be configured to generate second estimated object data (e.g., detected object data 204 of FIG. 2) based on the camera images 114. For example, the processing circuitry 108 may utilize an object detection technique, which may utilize a neural-network-enabled visual object detection algorithm, to detect objects in the environment of the automotive system 100 and to determine an estimated location of each detected object relative to the location of the automotive system 100. In one or more embodiments, a neural-network-enabled visual object detection algorithm applied by the processing circuitry 108 to generate the second estimated object data may additionally generate confidence scores for each object detection, such that the second estimated object data may define both positions and occupancy probabilities of objects detected in the camera images 114, where the occupancy probabilities are determined based on the confidence scores.

At block 808, the processing circuitry 108 generates an SI-estimated occupancy probability map (e.g., the SI-estimated occupancy probability map 206 of FIG. 2) based on the first estimated object data and the second estimated object data. For example, estimated object positions and unoccupied positions represented in the first estimated object data and the second estimated object data may be included in or represented in the SI-estimated occupancy probability map. In one or more embodiments, the estimated occupancy probability for a given cell of the SI-estimated occupancy probability map having a non-zero occupancy probability indicated in both the first estimated object data and the second estimated object data may be determined using a simple average of the indicated occupancy probabilities, a weighted average of the indicated occupancy probabilities, or another suitable measure of central tendency, as non-limiting examples. The SI-estimated occupancy probability map may subsequently be used to determine hyperparameters for an OGM mapping model, such as the mapping model 120.

In an example embodiment, a system includes at least one detection and ranging system configured to transmit signals, receive reflected signals corresponding to reflections of the transmitted signals by one or more objects in an environment around the at least one detection and ranging system, and generate point cloud data indicating positions of the objects, computer-readable memory configured to store side information representing the environment, and processing circuitry configured to receive the point cloud data from the at least one detection and ranging system, receive the side information from the computer-readable memory, determine hyperparameters for a mapping model based on the side information, and process the point cloud data using the mapping model using the hyperparameters to generate an occupancy grid map of the environment. The side information includes one or more of a digital map of the environment, an image of the environment, or a previously generated occupancy grid map of the environment.

In one or more embodiments, the side information includes a plurality of images of the environment and a plurality of previously generated occupancy grid maps.

In one or more embodiments, the processing circuitry is further configured to generate detected object data by performing object detection on the plurality of images of the environment. The detected object data includes locations and confidence scores for objects detected in the plurality of images.

In one or more embodiments, to generate the detected object data, the processing circuitry is further configured to process the plurality of images using a neural-network-based visual object detection technique to generate the locations and confidence scores.

In one or more embodiments, the processing circuitry is further configured to generate a predicted map including estimated object positions based on the plurality of previously generated occupancy grid maps.

In one or more embodiments, the processing circuitry is further configured to generate an estimated occupancy grid map based on the detected object data and the predicted map.

In one or more embodiments, the processing circuitry is further configured to determine the hyperparameters for modeling each grid cell of the occupancy grid map based on the estimated occupancy grid map.

In one or more embodiments, the mapping model is a Bayesian Learning based model and determining the hyperparameters based on the estimated occupancy grid map includes determining an index set of occupied grid cells of the estimated occupancy grid map, determining an index set of unoccupied grid cells of the estimated occupancy grid map, determining a first set of hyperparameters for the index set of occupied grid cells, and determining a second set of hyperparameters for the index set of unoccupied grid cells. The first set of hyperparameters is associated with associated with higher likelihood of non-zero occupancy than the second set of hyperparameters when utilized by the mapping model.

In one or more embodiments, the at least one detection and ranging system includes LiDAR transceiver circuitry.

In one or more embodiments, the at least one detection and ranging system includes radar transceiver circuitry.

In one or more embodiments, a method includes receiving, by at least one detection and ranging system, reflected signals corresponding to reflections of transmitted signals that are reflected by one or more objects in an environment around the at least one detection and ranging system, generating, by the at least one detection and ranging system, point cloud data indicating positions of the objects, receiving, by processing circuitry, the point cloud data, receiving, by the processing circuitry, side information from a computer-readable memory, the side information including at least one representation of the environment, determining, by the processing circuitry, hyperparameters for a mapping model based on the side information, and processing, by the processing circuitry, the point cloud data with the mapping model using the hyperparameters to generate an occupancy grid map of the environment. The side information includes one or more of at least one digital map of the environment, at least one image of the environment, or at least one previously generated occupancy grid map of the environment.

In one or more embodiments, the side information includes a plurality of images of the environment and a plurality of previously generated occupancy grid maps.

In one or more embodiments, the method further includes generating, by the processing circuitry, detected object data by performing object detection on the plurality of images of the environment. The detected object data includes locations and confidence scores for objects detected in the plurality of images.

In one or more embodiments, the method further includes generating the detected object data further includes processing, by the processing circuitry, the plurality of images using a neural-network-based visual object detection technique to generate the locations and confidence scores.

In one or more embodiments, the method further includes generating, by the processing circuitry, a predicted map including estimated object positions based on the plurality of previously generated occupancy grid maps.

In one or more embodiments, the method further includes generating, by the processing circuitry, an estimated occupancy grid map based on the detected object data and the predicted map.

In one or more embodiments, the method further includes determining, by the processing circuitry, the hyperparameters for modeling each grid cell of the occupancy grid map based on the estimated occupancy grid map.

In one or more embodiments, the mapping model is a Bayesian Learning based model and determining the hyperparameters based on the estimated occupancy grid map includes determining a first index set that includes indices of grid cells of the estimated occupancy grid map that are indicated to be occupied, determining a second index set that is the complement of the first index set, determining a first set of hyperparameters for the first index set, and determining a second set of hyperparameters for the second index set. The first set of hyperparameters is associated with associated with higher likelihood of non-zero occupancy than the second set of hyperparameters when utilized by the mapping model.

In one or more embodiments, the point cloud data includes radar point cloud data.

In one or more embodiments, the point cloud data includes LiDAR point cloud data.

Although the operations of the method(s) herein are shown and described in a particular order, the order of the operations of each method may be altered so that certain operations may be performed in an inverse order or so that certain operations may be performed, at least in part, concurrently with other operations. In one or more other embodiments, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments herein may be implemented entirely in hardware or in an implementation containing both hardware and software elements. In embodiments which use software, the software may include but is not limited to firmware, resident software, microcode, or other suitable software.

As used herein the terms "circuit" and "circuitry," including the term "processing circuitry" and related terminology means any suitable combination(s) of analog or digital circuit elements, hardware, firmware, software, and the like; including but not limited to, application-specific integrated circuits (ASICs), field programmable gate arrays (FPGAs), microcontrollers, and microprocessors. It will be understood that the term "circuitry" encompasses nonvolatile and volatile memory devices including, but not limited to random access memory (RAM), read-only memory (ROM), and the like, which can be implemented using any suitable devices, such as SRAM, DRAM, or magnetic storage devices as non-limiting examples. Along these lines it will be understood that references to a "processor" or "processing circuitry" can include devices in which general purpose computing devices includes or is otherwise coupled to memory which stores machine-readable instructions configured to cause the processing circuitry to perform the described actions. Such instructions can be stored as instructions in a high level programming language that is readable by human beings which are that are interpreted or compiled into object code or machine language, or they may be stored directly in a low-level language such as object code or machine language or another suitable representation, as nonlimiting examples.

It will be further understood that, unless explicitly stated otherwise, that features such as processing circuitry, memory, and related circuitry and devices can be implemented by any suitable combinations of one or more localized devices including, but not limiting to distributed systems formed by multiple distinct devices in communication with each other via direct electrical communication connections, wireless communication connections, and via public or private communication networks including the Internet. It will further be understood processing circuitry and related devices may be implemented by one or more physical machines or by virtual machines including, but not limited to, virtualized computing environments provided within a "cloud" computing environment or other virtualization systems.

While at least one exemplary embodiment has been presented in the foregoing detailed description, it should be appreciated that a vast number of variations exist. It should also be appreciated that exemplary embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A system comprising:

at least one detection and ranging system configured to transmit signals, receive reflected signals corresponding to reflections of the transmitted signals by one or more objects in an environment around the at least one detection and ranging system, and generate point cloud data indicating positions of the objects;
computer-readable memory configured to store side information representing the environment; and
processing circuitry configured to:

receive the point cloud data from the at least one detection and ranging system;
receive the side information from the computer-readable memory;
determine hyperparameters for a mapping model based on the side information; and
process the point cloud data using the mapping model using the hyperparameters to generate an occupancy grid map of the environment,

wherein the side information includes one or more of:

a digital map of the environment,
an image of the environment, or
a previously generated occupancy grid map of the environment.

2. The system of claim 1, wherein the side information includes a plurality of images of the environment and a plurality of previously generated occupancy grid maps.

3. The system of claim 2, wherein the processing circuitry is further configured to:
generate detected object data by performing object detection on the plurality of images of the environment, wherein the detected object data includes locations and confidence scores for objects detected in the plurality of images.

4. The system of claim 3, wherein, to generate the detected object data, the processing circuitry is further configured to:
process the plurality of images using a neural-network-based visual object detection technique to generate the locations and confidence scores.

5. The system of claim 3 or 4, wherein the processing circuitry is further configured to:
generate a predicted map including estimated object positions based on the plurality of previously generated occupancy grid maps.

6. The system of claim 5, wherein the processing circuitry is further configured to:
generate an estimated occupancy grid map based on the detected object data and the predicted map.

7. The system of claim 6, wherein the processing circuitry is further configured to:
determine the hyperparameters for modeling each grid cell of the occupancy grid map based on the estimated occupancy grid map.

8. The system of claim 7, wherein the mapping model is a Bayesian Learning based model and wherein determining the hyperparameters based on the estimated occupancy grid map includes:

determining an index set of occupied grid cells of the estimated occupancy grid map;
determining an index set of unoccupied grid cells of the estimated occupancy grid map;
determining a first set of hyperparameters for the index set of occupied grid cells; and
determining a second set of hyperparameters for the index set of unoccupied grid cells, wherein the first set of hyperparameters is associated with associated with higher likelihood of non-zero occupancy than the second set of hyperparameters when utilized by the mapping model.

9. The system of any preceding claim, wherein the at least one detection and ranging system includes LiDAR transceiver circuitry.

10. The system of any preceding claim 1, wherein the at least one detection and ranging system includes radar transceiver circuitry.

11. A method comprising:

receiving, by at least one detection and ranging system, reflected signals corresponding to reflections of transmitted signals that are reflected by one or more objects in an environment around the at least one detection and ranging system;
generating, by the at least one detection and ranging system, point cloud data indicating positions of the objects;
receiving, by processing circuitry, the point cloud data;
receiving, by the processing circuitry, side information from a computer-readable memory, the side information including at least one representation of the environment;
determining, by the processing circuitry, hyperparameters for a mapping model based on the side information; and
processing, by the processing circuitry, the point cloud data with the mapping model using the hyperparameters to generate an occupancy grid map of the environment,
wherein the side information includes one or more of:

at least one digital map of the environment,
at least one image of the environment, or
at least one previously generated occupancy grid map of the environment.

12. The method of claim 11, wherein the side information includes a plurality of images of the environment and a plurality of previously generated occupancy grid maps.

13. The method of claim 12, further comprising:
generating, by the processing circuitry, detected object data by performing object detection on the plurality of images of the environment, wherein the detected object data includes locations and confidence scores for objects detected in the plurality of images.

14. The method of claim 13, wherein generating the detected object data further comprises:
processing, by the processing circuitry, the plurality of images using a neural-network-based visual object detection technique to generate the locations and confidence scores.

15. The method of claim 13 or 14, further comprising:
generating, by the processing circuitry, a predicted map including estimated object positions based on the plurality of previously generated occupancy grid maps.

FIG. 1

EP 4 641 250 A1

FIG. 2

FIG. 3

EP 4 641 250 A1

FIG. 4

FIG. 5

EP 4 641 250 A1

FIG. 6

FIG. 7

800

802 — RETRIEVE CAMERA IMAGES AND PREVIOUS OCCUPANCY GRID MAPS (OGM)

804 — GENERATE FIRST ESTIMATED OBJECT DATA BASED ON PREVIOUS OGMS

806 — GENERATE SECOND ESTIMATED OBJECT DATA BY PERFORMING OBJECT DETECTION BASED ON CAMERA IMAGES

808 — GENERATE SI-ESTIMATED MAP BASED ON FIRST AND SECOND SETS OF ESTIMATED OBJECT POSITIONS

FIG. 8

**EUROPEAN SEARCH REPORT**

Application Number

EP 25 16 1663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/196829 A1 (CHEN NANHU [US] ET AL) 23 June 2022 (2022-06-23) * paragraphs [0036] - [0046], [0055] - [0062], [0076] - [0086], [0122] - [0128]; figures 2-1,2-2,4,7,14 * | 1-15 | INV. G01S7/48 G01S7/41 G01S13/06 G01S13/86 G01S13/89 |
| A | ONEN CAGAN ET AL: "LiDAR-Based Occupancy Grid Map Estimation Exploiting Spatial Sparsity", 2023 IEEE SENSORS, IEEE, 29 October 2023 (2023-10-29), pages 1-4, XP034477288, DOI: 10.1109/SENSORS56945.2023.10325050 [retrieved on 2023-11-28] * the whole document * | 1-15 | G01S13/931 G01S17/06 G01S17/894 G01S17/931 G06V10/764 G06V10/82 G06V20/56 G06V20/58 |
| A | US 2020/148215 A1 (MOHAJERIN NIMA [CA] ET AL) 14 May 2020 (2020-05-14) * paragraphs [0045] - [0060], [0067] - [0077], [0120] - [0132]; figures 1A,2,8 * | 1-15 | |
| A | US 2022/319188 A1 (KOGUT KRZYSZTOF [PL] ET AL) 6 October 2022 (2022-10-06) * paragraphs [0034] - [0079]; figures 2,3,5 * | 1-15 | |

TECHNICAL FIELDS
SEARCHED (IPC)

G01S
G06V

The present search report has been drawn up for all claims

| Place of search | Date of completion of the search | Examiner |
|---|---|---|
| Munich | 25 July 2025 | Reeck, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 1663

This annex lists the patent family members relating to the patent documents cited in  the above-mentioned European search report.
The members are as contained in the European Patent Office EDP file on
The European Patent Office is in no way liable for these particulars which are merely given for the purpose of information.

25-07-2025

| Patent document cited in search report | Publication date | Patent family member(s) | | Publication date |
|---|---|---|---|---|
| US 2022196829 A1 | 23-06-2022 | CN | 114646953 A | 21-06-2022 |
| | | EP | 4027169 A2 | 13-07-2022 |
| | | US | 2022196829 A1 | 23-06-2022 |
| US 2020148215 A1 | 14-05-2020 | CN | 113348422 A | 03-09-2021 |
| | | EP | 3857326 A1 | 04-08-2021 |
| | | US | 2020148215 A1 | 14-05-2020 |
| | | WO | 2020098456 A1 | 22-05-2020 |
| US 2022319188 A1 | 06-10-2022 | CN | 115249347 A | 28-10-2022 |
| | | EP | 4067930 A1 | 05-10-2022 |
| | | GB | 2605587 A | 12-10-2022 |
| | | US | 2022319188 A1 | 06-10-2022 |

EPO FORM P0459

For more details about this annex : see Official Journal of the European Patent Office, No. 12/82